# DEMANDE DE BREVET EUROPEEN

(11) **EP 2 806 346 A1**
(43) Date de publication de la demande: **26.11.2014**
(21) Numéro de dépôt: 14166252.8
(22) Date de dépôt: 28.04.2014
(51) Int. Cl.: G06F 3/0488, G06F 21/36

(54) **Procédé de génération d'au moins une partie d'un clavier virtuel, terminal électronique et produit programme d'ordinateur correspondant**

(30) Priorité: 21.05.2013 FR 1354545
(71) Demandeur: COMPAGNIE INDUSTRIELLE ET FINANCIERE D'INGENIERIE (INGENICO), 75015 Paris (FR)
(72) Inventeur: Leger, Michel, 78100 Saint Germain en Laye (FR)
(74) Mandataire: Le Noane, Karine

(57) **Abrégé**

L'invention concerne un procédé de génération d'au moins une partie d'un clavier virtuel sur un écran tactile d'un terminal électronique.
Selon l'invention, ledit procédé comprend, préalablement à une étape d'affichage dudit clavier virtuel sur ledit écran tactile, une étape de calcul d'une représentation graphique aléatoire dudit clavier virtuel délivrant au moins un paramètre représentatif d'une zone aléatoire d'occupation dudit clavier virtuel sur ledit écran tactile.

## Description

### 1. Domaine de l'invention

Le domaine de l'invention est celui des terminaux comprenant un écran tactile.

Plus précisément, l'invention concerne de tels terminaux portables, et leur amélioration afin de lutter contre le détournement de tels terminaux par des tiers mal intentionnés.

En particulier, l'invention s'applique aux terminaux permettant un paiement électronique.

### 2. Art antérieur

On connaît à ce jour de plus en plus de terminaux comprenant un écran tactile, comme les téléphones mobiles, les assistants numériques personnels (dits PDAs), les ordinateurs portables, les distributeurs automatiques de billets ou encore les caisses enregistreuses de commerce.

Il existe également des terminaux de paiement électroniques comprenant un écran tactile. Dans ce cas, un tel écran tactile peut représenter par exemple un clavier virtuel pour la validation d'un code confidentiel, ou le montant d'une transaction.

Un inconvénient de ces terminaux de paiement électroniques réside cependant dans le fait qu'un tel écran tactile peut garder trace de la saisie effectuée par un utilisateur, notamment de la saisie d'un code confidentiel ou des indications portées sur une carte bancaire. Par exemple, l'écran peut comporter des traces de doigt aux endroits correspondant à la désignation d'un chiffre particulier sur un clavier virtuel (par exemple parce que le terminal a été nettoyé juste avant la saisie du code secret, ou parce que l'écran ou la pointe d'un stylet sont revêtus d'un produit réfléchissant par exemple).

Ces traces seront particulièrement marquées lorsque le terminal est un terminal de paiement utilisé régulièrement par un même utilisateur, par exemple lorsque celui-ci utilise son propre téléphone mobile (par exemple un smart phone) présentant une application de paiement électronique.

De ce fait, il est facile à un tiers mal intentionné ayant accès au terminal de paiement de repérer les chiffres saisis. Il ne lui reste plus ensuite qu'à tenter les différentes permutations des chiffres repérés pour parvenir au code confidentiel. Pour un code à 4 chiffres, ceci correspond à un nombre relativement réduit de combinaisons (24, 12, 6, 4, ou même 1 seule, suivant que les chiffres soient répétés ou pas). Cette tentative peut en outre être facilitée par l'observation du mouvement des doigts de l'utilisateur pendant qu'il tape son code. En effet, ceci peut donner une indication sur l'ordonnancement de la séquence de chiffres composée.

Des solutions de l'art antérieur consistent à afficher les chiffres du clavier avec une disposition aléatoire au sein du pavé numérique (le « 5 » succédant au « 1 » et précédant le « 8 » par exemple). Cependant, la succession aléatoire des touches déroute l'utilisateur, qui est habitué à un certain enchaînement de mouvements de la main lorsqu'il utilise un clavier matériel, au point de lui faire oublier momentanément son code secret.

Il existe donc un besoin pour de nouveaux terminaux portables comprenant un écran tactile à la fois sécurisé et ergonomique.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un terminal portable comprenant un écran tactile qui permette de sécuriser la saisie d'une donnée sensible par un utilisateur.

L'invention a ainsi pour objectif de fournir un tel terminal qui soit également ergonomique pour l'utilisateur.

Un autre objectif de l'invention est de fournir un tel terminal qui soit peu coûteux et facile à fabriquer.

### 4. Exposé de l'invention

L'invention propose une solution nouvelle à ce problème, sous la forme d'un procédé de génération d'au moins une partie d'un clavier virtuel sur un écran tactile d'un terminal électronique.

Selon l'invention, ledit procédé comprend, préalablement à une étape d'affichage dudit clavier virtuel sur ledit écran tactile, une étape de calcul d'une représentation graphique aléatoire dudit clavier virtuel délivrant au moins un paramètre représentatif d'une zone aléatoire d'occupation dudit clavier virtuel sur ledit écran tactile.

Un tel clavier virtuel peut, par exemple, être destiné à la saisie de données sensibles, comme la saisie d'un code confidentiel, ou d'un montant de transaction.

En faisant varier la zone d'affichage du clavier sur l'écran, de façon aléatoire, la solution de l'invention, selon au moins un de ses modes de réalisation, permet de faire varier l'emplacement des touches du clavier sur l'écran, de façon à éviter qu'une observation de l'écran puisse permettre à un tiers mal intentionné de déterminer les touches qui ont été actionnées, et par conséquence de deviner un code saisi par un utilisateur sur ce clavier.

Selon une caractéristique particulière de l'invention, ladite étape de calcul comprend une étape de mémorisation de ladite représentation graphique aléatoire calculée.

Selon une caractéristique particulière de l'invention, ladite étape de calcul comprend une étape de comparaison de ladite représentation graphique aléatoire calculée avec au moins une représentation graphique précédemment mémorisée.

Un tel mode de réalisation permet d'éviter que, du fait du caractère aléatoire du calcul, le clavier virtuel ne vienne occuper une zone de l'écran qui a été déjà occupée par une représentation précédente du clavier virtuel. En particulier, l'invention permet notamment d'assurer que la zone occupée par ledit clavier sur ledit écran tactile varie toujours lors de deux saisies consécutives effectuées sur ledit écran tactile.

Selon une caractéristique particulière de l'invention, ladite étape de calcul tient compte d'au moins un critère de position relative des touches alphanumériques de ladite représentation graphique aléatoire dudit clavier virtuel.

Selon une caractéristique particulière de l'invention, ledit critère consiste à conserver inchangée la position relative d'au moins une partie des touches alphanumériques de ladite représentation graphique aléatoire entre deux affichages successifs dudit clavier virtuel.

Un tel mode de réalisation offre l'avantage de présenter une interface de saisie plus ergonomique à un utilisateur, dans la mesure où celui-ci peut effectuer un mouvement machinal, et répétitif, pour la saisie de son code secret, puisque l'enchaînement des touches susceptibles d'être utilisées pour composer ce code reste constant, tout en sécurisant la saisie grâce au déplacement de l'ensemble des touches par le biais d'une modification de l'emplacement sur l'écran ou de la forme du clavier.

Selon une caractéristique particulière de l'invention, ledit critère consiste à modifier la position relative d'au moins une partie des touches alphanumériques de ladite représentation graphique aléatoire entre deux affichages successifs dudit clavier virtuel.

Un tel mode de réalisation permet d'ajouter à la sécurité apportée par la modification aléatoire du clavier une seconde sécurité apportée par la variation, éventuellement aléatoire également, de la position relative des touches entre elles sur le clavier. Cette seconde sécurité permet notamment de se prémunir contre une interception du code saisi par le biais d'un moyen de visualisation et/ou d'enregistrement vidéo du mouvement de main effectué lors de la saisie d'un code.

Dans certains modes de réalisation de l'invention, les touches numériques du clavier peuvent garder une position relative inchangée tandis que les autres touches du clavier (notamment les touches permettant la validation, l'annulation ou la correction d'une saisie) peuvent être disposées aléatoirement dans l'espace laissé libre sur le clavier par les touches numériques.

Selon une caractéristique particulière de l'invention, ledit au moins un paramètre représentatif d'une zone aléatoire d'occupation dudit clavier virtuel sur ledit écran tactile appartient au groupe comprenant :
- une dimension dudit clavier virtuel ;
- un emplacement dudit clavier virtuel sur ledit écran ;
- une forme des contours dudit clavier virtuel ;
- une orientation dudit clavier virtuel par rapport audit écran ;

Un tel mode de réalisation permet, par la déformation du clavier, par exemple par la modification d'au moins une de ses dimensions (par exemple sa largeur), ou de son emplacement sur l'écran, ou encore par une déformation des contours du clavier avec un effet de zoom par exemple, de faire varier l'emplacement des touches.

Selon un autre aspect, l'invention concerne un produit programme d'ordinateur comprenant des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Selon encore un autre aspect, l'invention concerne aussi un terminal électronique comprenant des moyens de génération d'au moins une partie d'un clavier virtuel sur un écran tactile dudit terminal.

Selon l'invention, lesdits moyens de génération comprennent, outre des moyens d'affichage dudit clavier virtuel sur ledit écran tactile, des moyens de calcul d'une représentation graphique aléatoire dudit clavier virtuel délivrant au moins un paramètre représentatif d'une zone aléatoire d'occupation dudit clavier virtuel sur ledit écran tactile.

Selon une caractéristique particulière de l'invention, le terminal électronique consiste en un terminal de paiement.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1a à 1d illustrent des exemples de représentation graphique d'un clavier virtuel sur un terminal portable selon un au moins mode de réalisation particulier de l'invention ;
- la figure 2 présente les principales étapes du procédé de génération selon un mode de réalisation de l'invention ;
- la figure 3 présente la structure d'un terminal selon l'invention.

### 6. Description d'un mode de réalisation de l'invention

### 6.1 Principe général

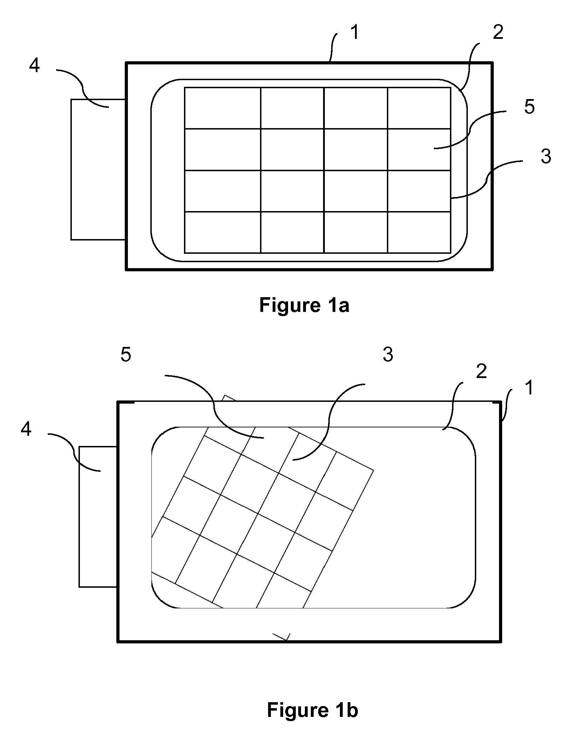

Les figures 1a à 1d illustrent le principe général de l'invention dans un mode de réalisation particulier, mis en oeuvre sur un terminal 1 portable, apte à la saisie d'une donnée sensible sous forme d'une série de caractères alphanumériques, comme un code confidentiel, par exemple pour la réalisation d'un paiement électronique. Il peut s'agir d'un terminal dédié à des paiements, par exemple un terminal de paiement situé dans un magasin, muni de moyens 4 de détection et/ou de lecture d'une carte bancaire.

Dans d'autres modes de réalisation de l'invention, le procédé peut également être mis en oeuvre sur un smart phone, muni éventuellement de moyens de lecture d'une carte bancaire.

Le principe général de l'invention repose sur la génération d'une représentation variable d'un clavier virtuel 3 particulier sur un terminal portable 1, par exemple un terminal de paiement, comprenant un écran tactile 2, ce clavier virtuel 3 ayant la particularité d'apparaître sous différentes apparences au fil des saisies. Les figures 1a à 1d illustrent l'affichage du clavier virtuel pour différentes saisies d'un code confidentiel, par exemple des saisies consécutives. Comme illustré, la représentation graphique du clavier virtuel diffère au fil des saisies, par exemple son emplacement, son orientation, au moins une de ses dimensions, et/ou sa forme, sont variables ...

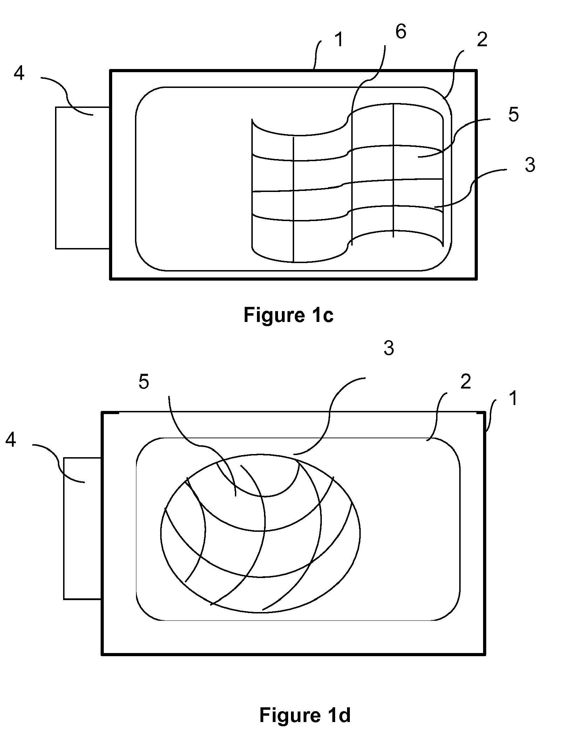

Selon l'invention, au lieu d'occuper, classiquement, un même emplacement de l'écran tactile 2, le clavier virtuel 3 du terminal 1 objet de l'invention peut, selon les saisies, avoir une orientation variable, de façon à inciter un utilisateur à faire pivoter le terminal 1 avant la saisie d'un code, ou occuper une région différente de l'écran tactile (par exemple en haut à droite puis en bas à gauche). Notamment, il peut être affiché avec des dimensions variables, ou être situé à un emplacement différent, ou encore son contour, et/ou le contour des touches qu'il représente, peut se déformer, par exemple en ayant des limites courbes et non rectilignes comme celles des pavés numériques de l'art antérieur. Les figures 1c et 1d illustrent ainsi des déformations concaves et/ou convexes du contour du clavier virtuel.

La représentation du clavier virtuel peut notamment varier de façon aléatoire entre chaque saisie.

Ainsi, un utilisateur qui souhaite saisir un code particulier, activera une zone particulière de l'écran tactile 2 qui variera s'il réitère sa saisie. Cette variation multipliera les traces sur l'écran tactile 2. De plus, les touches 5 du clavier virtuel 3 étant situées, du fait du changement de forme et /ou de position du clavier, à des endroits différents de l'écran à chaque saisie, il sera impossible de rapprocher une trace sur l'écran d'une touche quelconque du clavier lors d'une apparition, ultérieure à la saisie, du clavier.

Dans certains modes de réalisation, le clavier virtuel conserve un ordonnancement constant des touches, pour ne pas perturber l'utilisateur lors de sa saisie.

### 6.2 Description d'un mode de réalisation particulier

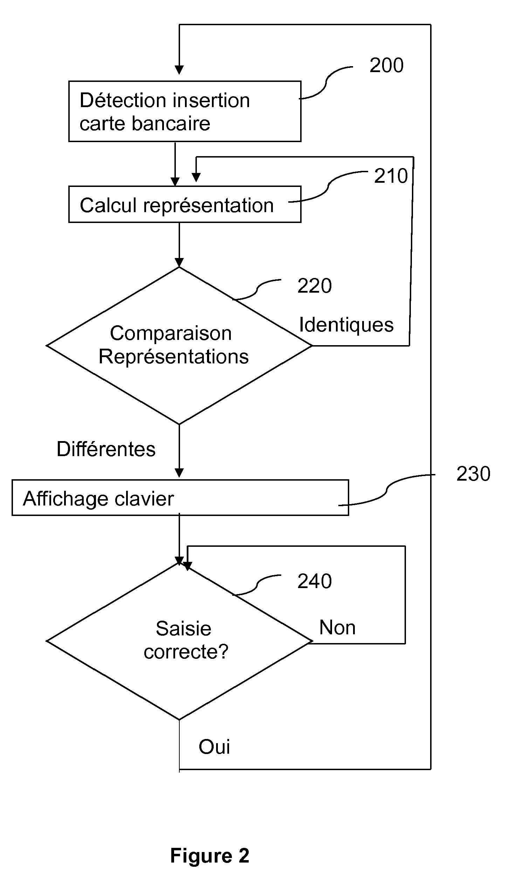

On présente maintenant, en relation avec la figure 2, le procédé de l'invention dans un mode de réalisation particulier, mis en oeuvre par exemple dans un terminal portable, par exemple le terminal de paiement illustré par les figures 1a à 1d.

Selon l'invention, le procédé de génération d'un clavier virtuel 3 sur l'écran tactile 2 du terminal comprend, préalablement à une étape 230 d'affichage du clavier virtuel 3 sur l'écran tactile 2, une étape de calcul 210 d'une représentation graphique aléatoire du clavier virtuel 3.

Dans le mode de réalisation illustré, le procédé comprend tout d'abord une étape 200 de détection et/ou de lecture d'une carte bancaire. Dans le mode de réalisation présenté, cette détection est suivie du calcul d'une représentation graphique du clavier virtuel à afficher.

L'étape de calcul 210 permet notamment de définir les paramètres de rendu qui sont utilisés pour construire la représentation graphique du clavier virtuel et notamment son emplacement, ses dimensions, sa forme et/ou son orientation sur l'écran tactile.

Notamment, l'étape de calcul 210 peut comprendre une génération aléatoire d'une pluralité de nombres, qui sont ensuite utilisés pour calculer un pourcentage d'occupation de l'écran tactile par le clavier virtuel 3 ou un pourcentage de déformation par rapport à une représentation graphique de référence du clavier virtuel 3, par exemple la dernière représentation calculée du clavier virtuel 3. Ainsi, un des nombres aléatoires peut permettre de calculer un pourcentage de redimensionnement d'au moins une des dimensions du clavier virtuel 3. La figure 1a illustre en particulier le rendu du clavier virtuel 3 avec la génération aléatoire d'une augmentation de sa largeur dans un certain pourcentage, par exemple de 38%.

La génération d'un nombre dans l'intervalle [0; 360] peut permettre de calculer, en degrés, une orientation de la base du clavier relativement à la base de l'écran 2. Ainsi, la figure 1b illustre le rendu du clavier avec la génération aléatoire d'une orientation de 60 ° environ.

Dans le mode de réalisation illustré en figure 1c, où les contours du clavier ont subi des déformations concaves et/ou convexes, un premier nombre peut être utilisé pour calculer la position d'inversion 6 des déformations et des second et troisième nombres peuvent être utilisés pour calculer le rayon de courbure des déformations concave et convexe des contours, de chaque côté de ce point d'inversion 6.

Dans le mode de réalisation illustré en figure 1d, la génération d'un premier nombre aléatoire permet par exemple de déterminer la forme du clavier, parmi une pluralité de n formes de base (dont un cercle ou un rectangle par exemple), par un calcul « modulo n », et la génération d'un second nombre aléatoire permet de calculer une déformation à appliquer à la forme de base sélectionnée, par exemple longitudinalement.

Dans certains modes de réalisation particuliers, notamment dans le mode de réalisation illustré en figure 2, l'étape de calcul 210 est suivie par une étape de comparaison 220 de la représentation graphique calculée avec au moins une autre représentation graphique déjà obtenue et mémorisée, de façon à vérifier que la représentation graphique générée n'a pas déjà été utilisée, ou tout au moins qu'elle ne correspond pas à l'une des dernières représentations affichées. Ainsi, certains modes de réalisation assure que l'emplacement de la zone occupée par le clavier sur l'écran tactile varie lors de deux saisies consécutives effectuées sur l'écran tactile.

Lorsqu'une représentation graphique identique a déjà été précédemment générée, et mémorisée, l'étape de calcul 210 est réitérée.

Par ailleurs, selon ce mode de réalisation, la représentation graphique calculée et affichée est mémorisée (étape non représentée), de façon à pouvoir être comparée, lors d'une étape 220 ultérieure, à une représentation graphique aléatoire calculée.

Dans le mode de réalisation illustré en figure 2, l'étape de comparaison 220 est suivie par une étape d'affichage 230 du clavier virtuel 3 sur l'écran. En sus du rendu du clavier, l'étape d'affichage 230 peut comprendre une invitation à saisir un code confidentiel, par exemple. Dans certains modes de réalisation, le procédé comprend aussi une étape 240 de vérification de la saisie effectuée. Dans certains modes de réalisation, comme dans le mode de réalisation illustré, la représentation du clavier peut restée inchangée tant que la saisie n'est pas correcte, pendant un nombre limité de saisies (classiquement trois) ou encore jusqu'au retrait de la carte bancaire. Ce mode de réalisation a l'avantage d'offrir un environnement de saisie constant, pour une même saisie, à un utilisateur, pendant ses multiples tentatives de saisie.

Dans d'autres modes de réalisation, l'étape de calcul 210, et les étapes suivant l'étape de calcul, peut être réitérée lors de chaque tentative de saisie. Un tel mode de réalisation offre l'avantage de sécuriser davantage la saisie d'un code.

### 6.3 Structure d'un terminal portable selon l'invention

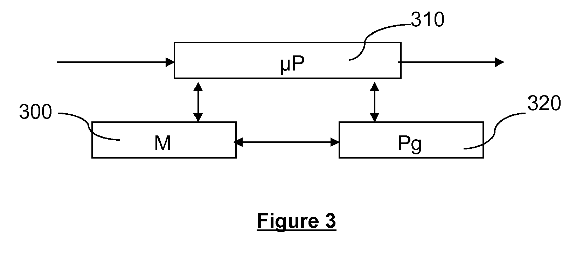

On présente, en relation avec la figure 3, la structure simplifiée d'un terminal portable selon l'invention.

Un tel terminal comprend une mémoire 300 comprenant une mémoire tampon, une unité de traitement 310, équipée par exemple d'un microprocesseur µP, et pilotée par un programme d'ordinateur 320, dont l'exécution met en oeuvre un procédé de génération, selon l'un des modes de réalisation particuliers de l'invention. Le terminal de l'invention est également muni d'un écran tactile. Dans le mode de réalisation présenté, il peut en outre être muni d'un module apte à l'insertion et à la lecture d'une carte bancaire.

A l'initialisation, les instructions de code du programme d'ordinateur 320 sont par exemple chargées dans une mémoire RAM avant d'être exécutées par le processeur de l'unité de traitement 310.

L'unité de traitement 310 reçoit en entrée une notification de l'insertion d'une carte bancaire dans le module apte à l'insertion et à la lecture d'une carte bancaire.

Le microprocesseur de l'unité de traitement 310 met en oeuvre les étapes du procédé de génération décrit précédemment, selon les instructions du programme d'ordinateur 320.

A cette fin, le terminal portable comprend, outre la mémoire tampon 300, un module apte à générer au moins une partie d'un clavier virtuel sur un écran tactile dudit terminal.

Selon l'invention, le terminal comprend également, outre des modules d'affichage dudit clavier virtuel sur ledit écran tactile, des modules de calcul d'une représentation graphique aléatoire du clavier virtuel délivrant au moins un paramètre représentatif d'une zone aléatoire d'occupation du clavier virtuel sur l'écran tactile.

Ces modules sont pilotés par le microprocesseur de l'unité de traitement 310.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour les modules concernés.

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

## Revendications

1. Procédé de génération d'au moins une partie d'un clavier virtuel sur un écran tactile d'un terminal électronique, **caractérisé en ce que** ledit procédé comprend, préalablement à une étape d'affichage dudit clavier virtuel sur ledit écran tactile, une étape de calcul d'une représentation graphique aléatoire dudit clavier virtuel délivrant au moins un paramètre représentatif d'une zone aléatoire d'occupation dudit clavier virtuel sur ledit écran tactile, et **en ce que** ladite étape de calcul comprend une étape de mémorisation de ladite représentation graphique aléatoire calculée et une étape de comparaison de ladite représentation graphique aléatoire calculée avec au moins une représentation graphique précédemment mémorisée.

2. Procédé de génération selon la revendication 1, **caractérisé en ce que** ladite étape de calcul tient compte d'au moins un critère de position relative des touches alphanumériques de ladite représentation graphique aléatoire dudit clavier virtuel.

3. Procédé de génération selon la revendication 2, **caractérisé en ce que** ledit critère consiste à conserver inchangée la position relative d'au moins une partie des touches alphanumériques de ladite représentation graphique aléatoire entre deux affichages successifs dudit clavier virtuel.

4. Procédé de génération selon la revendication 2, **caractérisé en ce que** ledit critère consiste à modifier la position relative d'au moins une partie des touches alphanumériques de ladite représentation graphique aléatoire entre deux affichages successifs dudit clavier virtuel.

5. Procédé de génération selon l'une quelconque des revendications 1 à 4, **caractérisé en ce que** ledit au moins un paramètre représentatif d'une zone aléatoire d'occupation dudit clavier virtuel sur ledit écran tactile appartient au groupe comprenant :
• une dimension dudit clavier virtuel ;
• un emplacement dudit clavier virtuel sur ledit écran ;
• une forme des contours dudit clavier virtuel ;
• une orientation dudit clavier virtuel par rapport audit écran ;

6. Produit programme d'ordinateur, comprenant des instructions de code de programme pour la mise en oeuvre du procédé de génération selon au moins une des revendications 1 à 5, lorsque ledit programme est exécuté sur un ordinateur.

7. Terminal électronique comprenant des moyens de génération d'au moins une partie d'un clavier virtuel sur un écran tactile dudit terminal, **caractérisé en ce que** lesdits moyens de génération comprennent, outre des moyens d'affichage dudit clavier virtuel sur ledit écran tactile, des moyens de calcul d'une représentation graphique aléatoire dudit clavier virtuel délivrant au moins un paramètre représentatif d'une zone aléatoire d'occupation dudit clavier virtuel sur ledit écran tactile, lesdits moyens de calcul comprenant des moyens de mémorisation de ladite représentation graphique aléatoire calculée et des moyens de comparaison de ladite représentation graphique aléatoire calculée avec au moins une représentation graphique précédemment mémorisée.
